(19) Europäisches Patentamt
European Patent Office
Office européen des brevets

(11) **EP 2 722 783 A2**

(12) **EUROPEAN PATENT APPLICATION**

(43) Date of publication:
**23.04.2014 Bulletin 2014/17**

(51) Int Cl.:
***G06F 21/10*** *(2013.01)*

(21) Application number: **13188990.9**

(22) Date of filing: **16.10.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **19.10.2012 KR 20120116578**

(71) Applicant: **Samsung Electronics Co., Ltd
Gyeonggi-do 443-742 (KR)**

(72) Inventor: **Yi, Jungbae
443-742 Gyeonggi-do (KR)**

(74) Representative: **Birchenough, Lewis
Harrison Goddard Foote LLP
Saviour House
9 St Saviourgate
York YO1 8NQ (GB)**

(54) **License verification method and apparatus**

(57)    A method and apparatus are provided for verifying a license of software including binary files. The license verification method includes acquiring a binary file; extracting a symbol and a command sequence from the binary file; and verifying the symbol and the command sequence using a database including licenses to be verified.

FIG. 1

EP 2 722 783 A2

**Description**

**BACKGROUND OF THE INVENTION**

1. Field of the Invention

The present invention relates generally to a license verification method and apparatus, and in particular, to a method and apparatus for verifying a license for software including binary files.

2. Description of the Related Art

As the use of quality-verified Free and Open Source Software (FOSS) is wide spread, program developers often take advantage of a shortened development period, a reduced development cost, and a quicker time to market for programs by utilizing FOSS in the program development. Basically, the high quality FOSS makes it possible for the developer to develop a software product with low investment cost.

However, when using FOSS, a program developer must verify that the embedded FOSS complies with the corresponding license terms in order to avoid the risk of a lawsuit by a FOSS license organization.

Typically, the license verification is performed in units of files, based on the software source code, e.g., using special tools, such as ProtexIP®. That is, the software license is verified using a verification tool, by matching the software code to a knowledge base of a previously acquired component pool in units of files.

In the conventional license verification method, however, there is no way of verifying the license type of a file inserted as a binary file through outsourcing or open source. Accordingly, the conventional verification tools lack accuracy for verifying a license of a binary file included in open source, and thus, there is still a risk of license verification failure.

**SUMMARY OF THE INVENTION**

In order to address at least some of the above-described problems occurring in the related art, an aspect of the present invention is to provide a license verification method and apparatus for verifying a license of software including binary files.

Another aspect of the present invention is to provide a license verification method and apparatus that minimize a risk caused by software license infringement, by verifying binary files included in a software product, as well as source code of the software itself.

In accordance with an aspect of the present invention, a method of verifying a license by a license verification apparatus method is provided, which includes acquiring, by the license verification apparatus, a binary file; extracting a symbol and a command sequence from the binary file; and verifying the symbol and the command sequence using a database including licenses to be verified.

In accordance with another aspect of the present invention, a method for verifying a license of a binary file by a license verification apparatus is provided, which includes selecting, by the license verification apparatus, symbols included in open sources; generating a knowledge database including the selected symbols; generating a hex knowledge database with per-function command sequences; acquiring the binary file to be verified; extracting a symbol and a command sequence of the binary file; verifying the symbol of the binary file, based on the knowledge database; and verifying the command sequence of the binary file, based on the hex knowledge database.

In accordance with another aspect of the present invention, a license verification apparatus is provided, which includes an input unit configured to receive an input for a license verification request; and a control unit configured to acquire a binary file in response to the license verification request, extract a symbol and a command sequence of the binary file, and verify the symbol and command sequence in series using a database including licenses to be verified.

In accordance with another aspect of the present invention, a license verification apparatus for verifying a license of a binary file is provided, which includes a knowledge database generator configured to build a knowledge database including symbols selected from open sources, based on degrees of uniqueness; a hex knowledge database generator configured to build a hex knowledge database including per-function command sequences of the open sources; and a license verification engine configured to extract the symbols and command sequences of the binary file and to search the knowledge database and the hex knowledge database for the symbol and a per-function command sequence to verify the license of the binary file.

**BRIEF DESCRIPTION OF THE DRAWINGS**

The above and other aspects, features, and advantages of certain embodiments of the present invention will be more apparent from the following detailed description taken in conjunction with the accompanying drawings, in which:

FIG. 1 is a block diagram illustrating a license verification apparatus according to an embodiment of the present invention;

FIG. 2 illustrates a free/open source crawling procedure of a license verification method according to an embodiment of the present invention;

FIG. 3 illustrates an auto-crawling procedure of a license verification method according to an embodiment of the present invention;

FIG. 4 illustrates a normal structure of an open source package to be processed in a license verification method according to an embodiment of the present invention;

FIG. 5 illustrates a process of generating a hex knowledge database for use in a license verification method according to an embodiment of the present invention;

FIG. 6 illustrates a database table for use in a license verification method according to an embodiment of the present invention;

FIG. 7 illustrates a verification progress status screen displayed in a license verification method according to an embodiment of the present invention;

FIG. 8 is a flowchart illustrating a license verification method for verifying a binary file license according to an embodiment of the present invention;

FIG. 9 illustrates a license verification result report screen displayed in a license verification method according to an embodiment of the present invention;

FIG. 10 is a flowchart illustrating a verification target type analysis procedure of a license verification method according to an embodiment of the present invention; and

FIG. 11 is a flowchart illustrating a knowledge database generation procedure of a license verification method according to an embodiment of the present invention.

## DETAILED DESCRIPTION OF EMBODIMENTS OF THE INVENTION

Various embodiments of the present invention will now be described in detail with reference to the accompanying drawings. In the following description, specific details such as detailed configuration and components are merely provided to assist the overall understanding of these embodiments of the present invention. Therefore, it should be apparent to those skilled in the art that various changes and modifications of the embodiments described herein can be made without departing from the scope and spirit of the present invention. In addition, descriptions of well-known functions and constructions are omitted for clarity and conciseness.

Various aspects of the present invention are applicable to electronic devices for performing license verification on a binary file. More specifically, various aspects of the present invention are applicable to an electronic device or service for verifying a license of a binary file embedded into an appliance, such as a mobile device, a Television (TV), a printer, a refrigerator, etc.

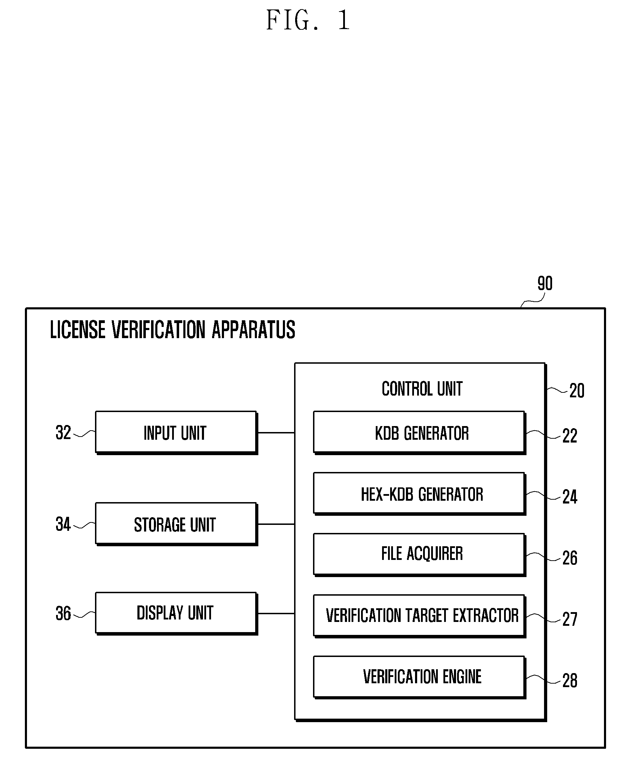

FIG. 1 is a block diagram illustrating a license verification apparatus according to an embodiment of the present invention.

Referring to FIG. 1, the license verification apparatus 90 includes a control unit 20, an input unit 32, a storage unit 34, and a display unit 26. The input unit 32 receives a user input, e.g., a user input for selecting a license verification request or license verification target. For example, the input unit 32 can be implemented with at least one of a keyboard, a key pad, a dome switch, a touch pad (resistive/capacitive), a jog wheel, and a jog switch.

The control unit 20, e.g., a microprocessor, controls the overall operation of the license verification device 90. For example, the control unit 20 controls the license verification apparatus 90 to verify a usage license of a verification target.

The control unit 20 includes a Kernel De-Bugger (KDB) generator 22, a HEX-KDB generator 24, a file acquirer 26, a verification target extractor 27, and a verification engine 28.

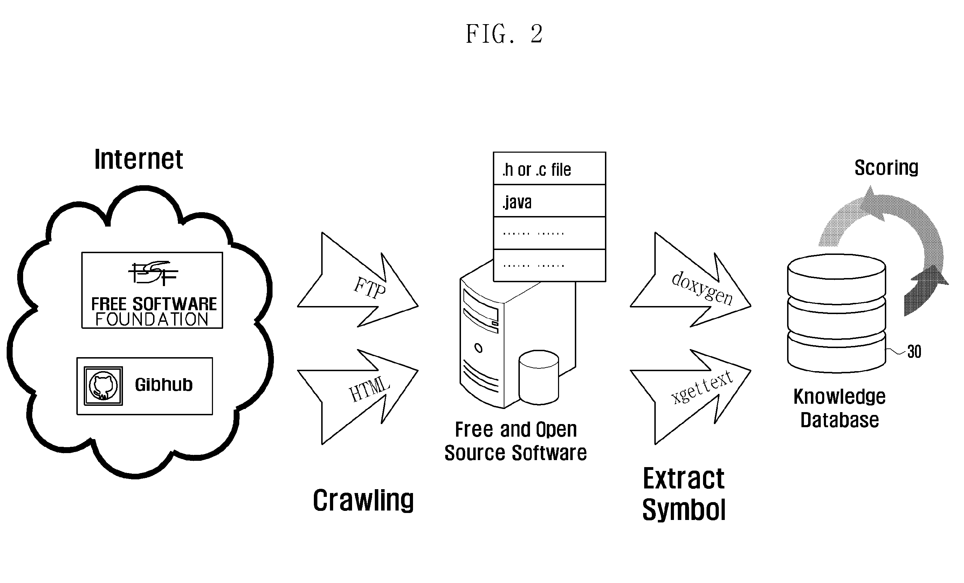

The KDB generator 22 stores the information extracted from various open source projects in a database, i.e., generates a knowledge database 30, as illustrated in FIG. 2.

For example, the extracted information may include a project name of the open source, a license type, string literals, a function name, and a degree of uniqueness of a symbol.

The knowledge database 30 may be formed for each license and include at least one symbol corresponding to the license, or may be formed for a kernel module, which includes at least one of a function, symbol and Application Programming Interface (API) name for the license.

The extracted information stored in the knowledge database 30 can be configured as validation criteria with which the symbols to be compared for license verification.

The knowledge database 30 can also be referred to as a dictionary, a component pool, etc.

The reliability of the knowledge database 30 is related to the reliability of the verification tool, i.e., the license verification apparatus 90. More specifically, in order to improve the reliability of the license verification apparatus 90, the KDB generator 22 selects symbols as references for license verification. In order to select the reference symbols for license verification, the KDB generator 22 performs three steps: (1) crawling the open source, (2) identifying the license and extracting symbols, and (3) scoring the symbols.

FIG. 2 illustrates a free/open source crawling procedure of a license verification method according to an embodiment of the present invention

Referring to FIG. 2, the KDB generator 22 crawls the source code of the open source package stored in the storage unit 32. That is, the KDB generator 22 collects the free and open source packages as the original source of the functions and strings. Hereinafter, the free/open source package is referred to as "open source" for convenience sake.

Because there is a large amount of open source packages, it takes a long time to collect the open source packages, and thus, the KDB generator 22 automatically crawls open source packages from websites, such as Free Software Foundations, Source Forge, and GNU FTP, in order to build an auto-crawling environment system. That is, the KDB generator 22 automatically crawls and downloads the open source packages.

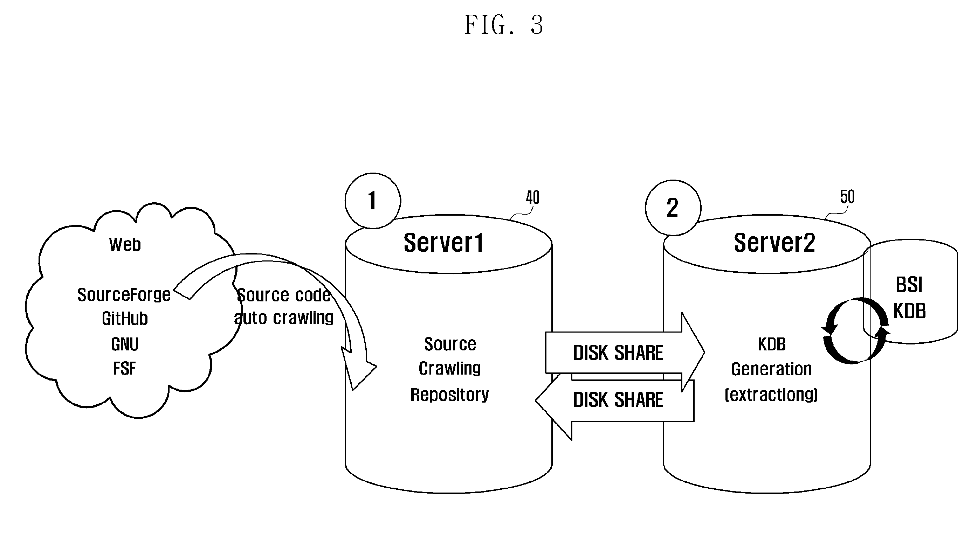

FIG. 3 illustrates an auto-crawling procedure of a license verification method according to an embodiment of the present invention.

Referring to FIG. 3, a distributed auto-crawling environment system includes distributed servers 40 and 50, because the processing load for crawling the open source packages and the amount of the open source package is so large.

Although it is typical that open source packages are collected in the form of source code such as C/C++, in accordance with an embodiment of the present invention open source is collected as a binary type and characteristics to verify the binary files. For example, when a license verification target is a Linux kernel module, it is possible to collect GPL-Only Symbols (GPL-Only APIs) included in the Linux kernel source as validation criteria. Further, when a license verification target is an APK-Android application file, it is possible to collect Java language-based packages as validation criteria.

To identify a license and extracting symbols, the KDB generator 22 checks the license type of the open source package and extracts the symbols of the source code.

More specifically, the KDB generator 22 unpacks the source package. Typically, the downloaded source is packaged in a file of tar, gzip, and zip format. In order to unpack the open source package, the KDB generator 22 first checks the package type and decompress the open source package according to the package type, and then unpacks or decompiles the decompressed open source package.

Thereafter, the KDB generator 22 checks the license of the open source package. More specifically, in order to perform license verification based on the symbols extracted from the open source package, the KDB generator 22 has to check the license type of each symbol. Commonly, the open source package has a source folder including a COPYING or LICENSE text file.

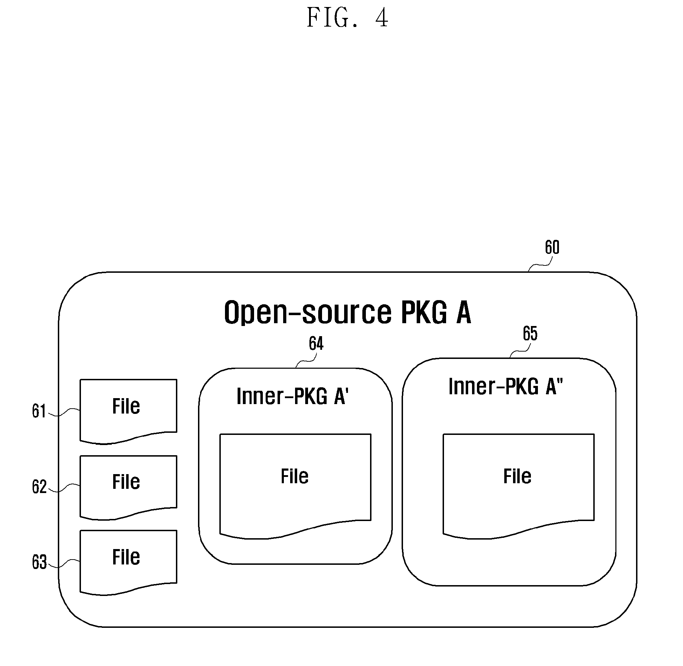

FIG. 4 illustrates a normal structure of an open source package to be processed in a license verification method according to an embodiment of the present invention.

Referring to FIG. 4, the open source package 60 includes a plurality of files 61, 62, and 63, and a plurality of inner packages 64 and 65.

When extracting a function and strings from the source code, the KDB generator 22 generates an Extensible Markup Language (XML) output file of the source code, e.g., using a doxygen device to analyze the function type's symbol. The XML output file can be classified by property of the source code. The KDB generator 22 then parses the XML output file to classify a property of the function symbol. The function set is finally classified into a package symbol. The license of the symbol is based on the original source file.

In order to extract the string symbol form the code, a utility called xgettext is used, which extracts all strings between quotation marks. This tool can also be used to extract strings from the source code. With the extracted strings, the license of the original file can be granted.

The KDB generator 22 scores the symbol, i.e., calculates a degree of uniqueness of the symbol and scores the degree of uniqueness to the symbol.

More specifically, the KDB generator 22 selects the symbol as the license verification criteria, and thus, the duplicated and redundant symbols with different functions, but having the same spelling of the function corresponding to the symbols, are excluded from the license verification criteria.

For example, the KDB generator 22 excludes redundant symbols and duplicated symbols for a different function, but which have identical spellings, such as 'printf', 'scan_files', and 'Error:%s %s'.

The degree of uniqueness is capable of being calculated for each symbol and scored to the symbol. The degree of uniqueness may be used to check an amount of a specific symbol in the open source project.

For example, the degree of uniqueness can be calculated using Equation (1) below.

$$Score(s)= \frac{Length(s)}{\alpha^{|pkgs(s)|-1} * \beta^{|files(s)|-1}}$$

In equation, a degree of uniqueness is proportional to a length of a symbol and inversely proportional to a number of symbols in the open source, i.e., the package and file, and a redundant symbol degree is expressed with constants alpha ($\alpha$) and beta ($\beta$).

The constants $\alpha$ and $\beta$ can be set to values determined by analyzing the simulation results acquired by changing values. The score as an official result value decreases inversely proportional to the number of duplications of the symbol. The score is reflected to the degree of uniqueness of the symbol.

The KDB generator 22 extracts the symbol corresponding to a degree of uniqueness that is greater than or equal to a value. That is, the KDB generator 22 extracts the symbol having a degree of uniqueness that greater than or equal to a threshold and removes the symbol having a degree of uniqueness that is less than the threshold, i.e., a redundant or duplicated symbol. The extracted symbol can be stored in the knowledge database as license verification criteria.

In addition, the KDB generator 22 stores the symbol information including an open source project name, a function name, a license type, and string literals, and scored by the degree of uniqueness, in the knowledge database 30.

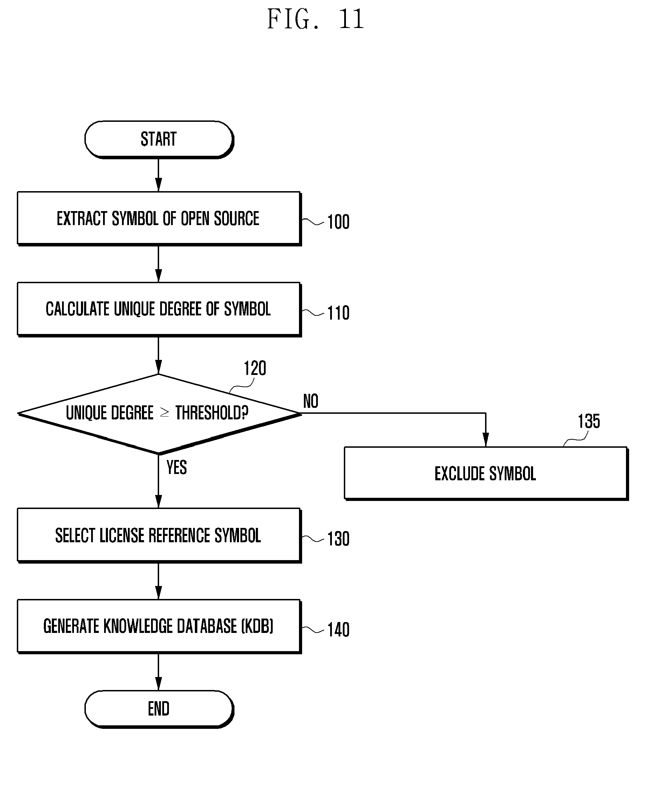

FIG. 11 is a flowchart illustrating a knowledge database generation procedure in a license verification method according to an embodiment of the present invention.

Referring to FIG. 12, the KDB generator 22 extracts a symbol of the open source in step 100. In step 110, the KDB generator 22 calculates a degree of uniqueness of the extracted symbol.

In step 102, the KDB generator 22 determines if the degree of uniqueness of the extracted symbol is greater than or equal to a threshold.

When the degree of uniqueness of the extracted symbol is greater than or equal to the threshold, the KDB generator 22 selects the symbol as license reference symbol in step 130. However, when the degree of uniqueness of the extracted symbol is less than the threshold, the KDB generator 22 excludes the symbol in step 135.

In step 140, the KDB generator 22 generates the knowledge database 30 including the selected license reference symbol.

Returning to FIG. 1, the HEX-KDB generator 24 generates a HEX-KDB by storing command sequences of respective functions of the open source.

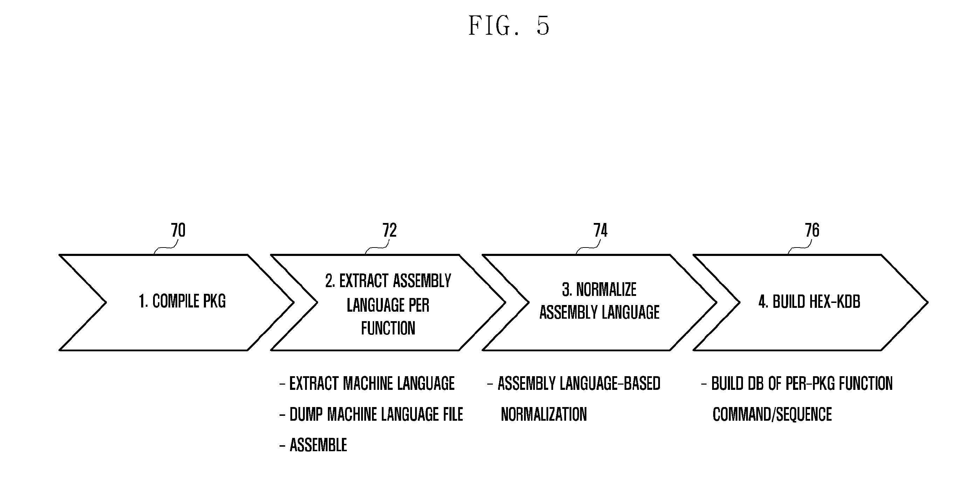

FIG. 5 illustrates a process of generating a hex knowledge database for use in a license verification method according to an embodiment of the present invention.

Referring to FIG 5, the HEX-KDB generator 24 compiles the source code of the open source package into binary in step 70. In step 72, extracts the assembly language for each function. That is, the HEX-KDB generator 24 extracts the machine language based on the compiled binary, dumps the machine language file, and assembles the language code.

In step 74, the HEX-KDB generator 24 performs normalization, based on the assembly language.

In step 76, the HEX-KDB generator 24 generates the HEX-KDB including a language sequence for each function.

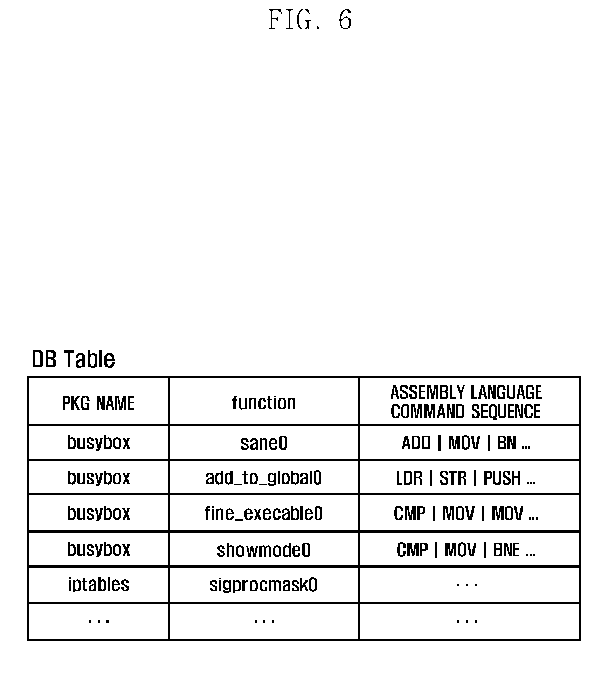

FIG. 6 illustrates a database table for use in a license verification method according to an embodiment of the present invention.

Referring to FIG 6, the HEX-KDB generator 24 normalizes the assembly language command sequences as illustrated in the DB table and the normalized assembly language command sequences in the form of the HEX-KDB.

Returning to FIG. 1, the file acquirer 26 acquires a verification target, i.e., acquires a binary file from the verification target. The verification target can be in a type of file, folder, compressed file, or package file. The license verification target can be a kernel module for Linux kernel or include a kernel module.

The file acquirer 26 determines whether the license verification target is a compressed file type or a package file type. The compressed file is generated by compressing multiple files into a single file, and thus, can be decompressed into the original files. The package file is generated by packing multiple files into one package, which can be decompressed, unpacked, or decompiled into the original files. For example, the compressed file or package file may have the file extension of .apk, .dpkg, .rpm, etc. or be a rootfs image file. Here, the original files constituting the compressed file or package file may include binary files.

The file acquirer 260 determines whether the license verification target is a binary file. A binary file is composed of binary data with an execution or library file extension such as .a, .so, .lib, .dll, and .exe, with the exception of a resource file, such as image and multimedia files.

The file acquirer 26 determines whether the verification target is a binary file and, if the verification target is a folder, whether the at least one file contained in the folder is a binary file. The verification apparatus 90 determines whether the files constituting the compressed or package file are binary files.

If the verification target is a binary file, the file acquirer 26 acquires the binary file.

If the verification target is not a binary file, the file acquirer 26 acquires the verification target itself, or if the verification target is a folder, the file acquirer 26 acquires the binary files contained in the folder. The verification apparatus 90 is also capable of acquiring the binary files among the files constituting the compressed or package file.

The file acquirer 26 determines whether the verification target corresponds to a kernel module. A kernel module is a program for performing specific functions of the kernel, such as a device driver that may be loaded or unloaded to or from the kernel according to a user's intention. For example, the kernel module may have the library file extension such as .ko.

The kernel module can be used for extending the file system and device driver. The kernel module is written with an API or can be written in the form of a binary file through build. The kernel API can be classified as a GNU General Public License (GPL) API or Non-GPL API, and the license type can be determined depending on the used kernel API.

The file acquirer 26 determines whether the verification target is a kernel module. The file acquirer 26 is also capable of determining whether the binary file uses the kernel module through system call.

If the verification target is a kernel module, the file acquirer 26 acquires the kernel module.

If the license verification target is a compressed or package file, the verification target extractor 27 decompresses or decompiles the license verification target.

The verification target extractor 27 processes the compressed or package file into original files by decompressing, unpacking, or decompiling the compressed or package file. For example, the original files may include at least one binary file.

The verification target extractor 27 extracts symbols and command sequences as the verification target. More specifically, the verification target extractor 27 extracts the symbols of at least one binary file including the information on at least one of a binary file function name, a function type, and a function name length.

The verification target extractor 27 extracts the command sequences of the binary file by extracting machine language from the binary file, assembling the machine language, and normalizing the command sequences for each assembly language.

The verification target extractor 27 generates a list of the symbols and command sequences of the binary file to which license verification is performed and stores the list in the storage unit 34.

The verification engine 28 verifies the symbols and command sequences using the database generated, based on the licenses for which verification is performed, and extracts the string literals using a system utility, such as readelf, strings, and nm.

The verification engine 28 stores the license verification results on the binary files or symbols and command sequences of the kernel module in the storage unit 34, and displays the license verification result on the display unit 36.

The storage unit 34 stores programs, information, and data related to the operations of the license verification apparatus 90. The storage unit 34 is also capable of storing the KDB and HEX-KDB for license verification and temporal data generated in the license verification process and license verification result report temporarily or semi-persistently.

The storage unit 34 stores a program written for performing license verification or writes a program in the form of computer-readable codes. The program or computer-readable code stored in the storage unit 34 can be executed under the control of the control unit 20.

The storage unit 34 can be implemented with at least one of a flash memory, a hard disk, a micro multimedia card (e.g., Secure Digital (SD) and xD memory cards), a Random Access Memory (RAM), a Static RAM (SRAM), a Read-Only Memory (ROM), an Electrically Erasable Programmable Read-Only Memory (EEPROM), a Programmable Read-Only Memory (PROM), a magnetic memory, a magnetic disc, an optical disc, etc.

The display unit 36 displays (outputs) information processed by the license verification apparatus 90. For example, the display unit displays a User Interface (UI) screen associated with the operation of the license verification apparatus 90.

For example. the display unit 36 can be implemented with one of a Liquid Crystal Display (LCD), a Thin Film Transistor LCD (TFT LCD), an Organic Light Emitting Diode (OLED), a flexible display, and a 3-Dimentinoal (3D) display). Further, the display unit 36 can be implemented as a touchscreen with a touch sensor and/or proximity sensor. In this case, the display unit 36 is also capable of operating as the input unit 32.

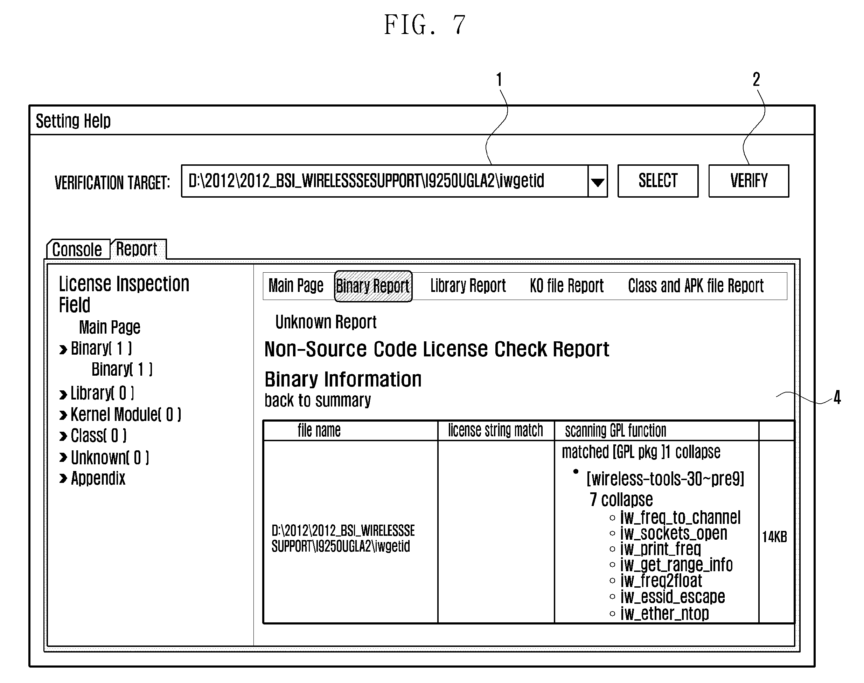

FIG. 7 illustrates a verification progress status screen displayed in a license verification method according to an embodiment of the present invention.

Referring to FIG. 7, the display unit 36 displays a verification target selection object 1, a verification request input object 2, and a verification information presentation object 4. The verification target selection object 1 is for selecting the verification target to which the license verification is performed and may include the object to be verified, a storage path, a name, and an extension of the selected verification target. The verification target selection object 1 can be displayed along with at least one of text, icon, button, image, window, and any combination thereof.

The verification request input object 2 is for receiving an input for verification request for the verification object. The verification request input object 2 can be replaced with a verification termination request input object in the middle of the verification process started in response to the verification request. The verification request input object 2 can also be displayed along with at least one of text, icon, button, image, window, and any combination thereof.

The verification information presentation object 4 is for presenting the verification information on the verification target. For example, the verification information presentation object 4 may present at least one of a verification object file list, a binary file list, a verification target type, verification target decompression, unpack, or decompile state.

When performing verification, the display unit 36 displays the verification progress status including at least one of the list files being verified and a list of symbols and command sequences being verified.

When verification has completed, the display unit 36 displays a verification result report, which includes at least one of a verified file, string literals, a license list, a list of files corresponding to licenses, a number of files, a list of functions or symbols and command sequences, and a reliability corresponding to the license.

The verification information presentation object 4 may also be implemented with a window for presenting the verification information and include at least one of text, icon, button, image, window, and any combination thereof.

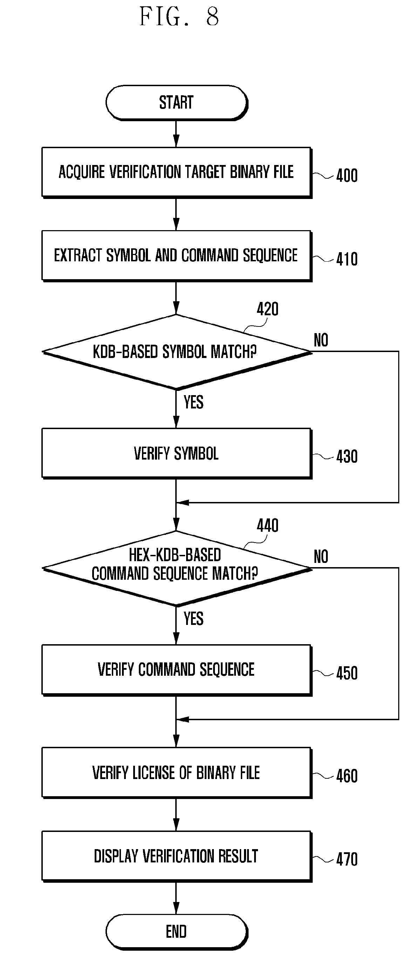

FIG. 8 is a flowchart illustrating a license verification method for verifying a binary file license according to an embodiment of the present invention.

Referring to FIG. 8, the license verification apparatus 90 acquires a binary file as a verification target in step 400. That is, the license verification apparatus 90 acquires binary files for performing license verification thereon. As described above, step 400 may include analyzing the type of the verification target; decompressing, unpacking, or decompiling, if the type of the verification target is the compressed or package file; and acquiring binary file based on the decompressed or decompiled result.

In step 410, the license verification apparatus 90 extracts the symbols and command sequences of the binary file. That is, the license verification apparatus extracts at least one of a name, a type, and a name length of a function.

More specifically, the license verification apparatus 90 extracts the machine language from the binary file, assembles the machine language, and normalizes the command sequences of the respective functions of the assembly language in order to extract the command sequences of the binary file.

In step 420, the license verification apparatus 90 performs a symbol matching test, based on the KDB. That is, the license verification apparatus 90 matches the symbols of the binary files, based on the knowledge database 30. As described above, the license verification apparatus 90 compares a symbol of the binary files with the reference symbols stored in the knowledge database 30 to retrieve the same symbol. Here, the symbols registered with the knowledge database 30 are the reference symbols for license verification on the symbol of the binary file.

In step 430, when a match is found, the license verification apparatus 90 verifies the symbol of the binary file. That is, the license verification apparatus 90 verifies the license of the symbol of the binary file based on the matching result of step 420.

In step 440, the license verification apparatus 90 performs a command sequence matching test on the binary file. That is, the license verification apparatus 90 compares the command sequence of the binary file with the reference command sequences registered with the HEX-KDB. Here, the command sequences registered with the HEX-KDB are the reference command sequences for license verification.

In step 450, the license verification apparatus 90 verifies the command sequence of the binary file. The license verification apparatus 90 verifies the license of the command sequence of the binary file based on the matching result of step 440.

In step 460, the license verification apparatus 90 verifies the license of the binary file. That is, the license verification apparatus 90 verifies the symbols and command sequences of the binary files in sequence to verify the binary file in stepwise manner. The license verification apparatus 90 also verifies the command sequences, as well as the symbols of the binary files, in order to improve the reliability of the license verification.

In step 470, the license verification apparatus 90 displays the license verification result, indicating whether the verification target is verified successfully.

The license verification apparatus 90 generates a verification result report to be presented to the user, which may include at least one of files, symbols, command sequences for license verification, the list of license, the list of the license-protected files, number of licensed files, list of functions or symbols, list of command sequences, and reliabilities of the licenses.

Herein, the license verification apparatus 90 determines the numbers of symbols and command sequences considered to be license-protected and scores the reliability according to the determination result.

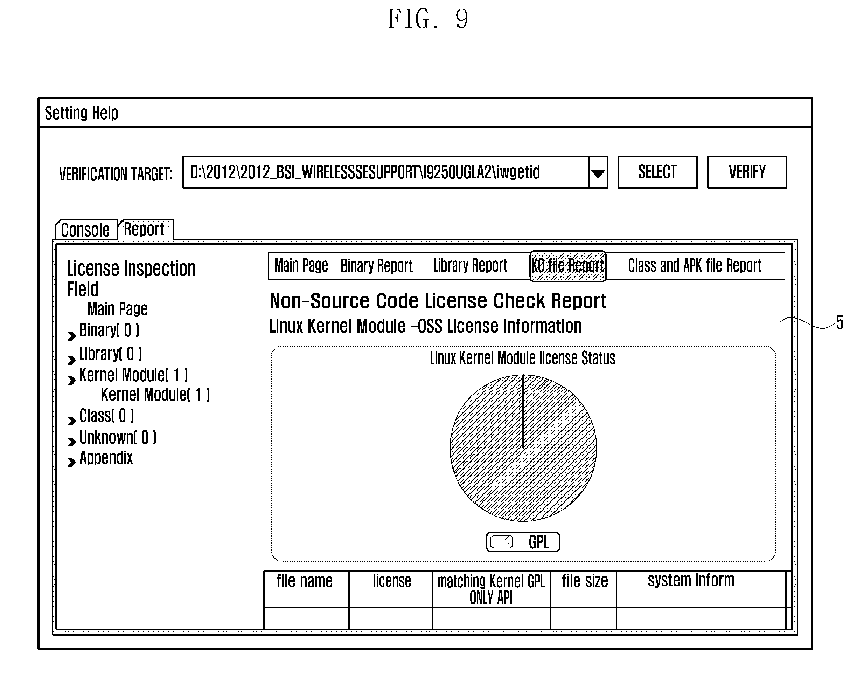

FIG. 9 illustrates a license verification result report screen displayed in a license verification method according to an embodiment of the present invention.

Referring to FIG. 9, the license verification apparatus 90 displays a verification information presentation object 5 for presenting the license verification result. The license verification apparatus 90 presents the verification result in the form of a list, a table, or a frame with values indicated by any of line, circle, and bar graph. For example, in FIG. 9, the license verification apparatus 90 presents a percentage graph of the licenses based on the number of symbols corresponding to at least one license for the verification target.

Although not illustrated, it is also possible to determine whether the binary file is a license-protected file based on the result of verification of the symbols and command sequences of the binary file in step 460.

The license verification apparatus 90 is also capable of analyzing the type of the verification target.

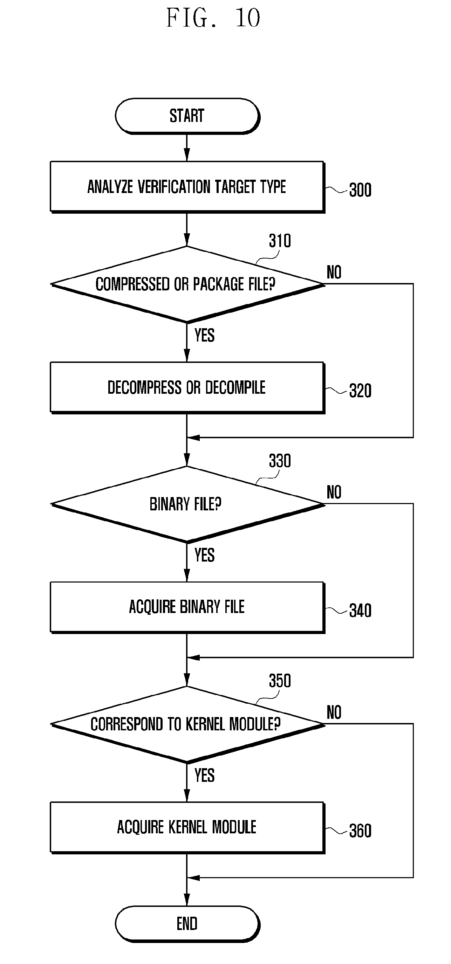

FIG. 10 is a flowchart illustrating a verification target type analysis procedure of a license verification method according to an embodiment of the present invention.

Referring to FIG. 10, the license verification apparatus 90 analyzes the type of the verification target in step 300. The verification target can be any of a file, a folder, and a compressed or package file. The verification target can be a Linux kernel module or includes a kernel module.

In step 310, the license verification apparatus 90 determines whether the verification target is a compressed or package file.

If the verification target is a compressed or package file, the license verification apparatus 90 decompresses or decompiles the verification target in step 320.

The decompressed, unpacked, or decompiled files may include at least one binary file.

In step 330, the license verification apparatus 90 determines whether the verification target is a binary file.

If the verification target is a binary file, the license verification apparatus acquires the binary file in step 340.

As described above, if the verification target is a binary file, the license verification apparatus 90 acquires the verification target itself or, if the verification target is a folder, the license verification apparatus 90 acquires the binary files contained in the folder. The license verification apparatus 90 is also capable of acquiring the binary files among the files constituting the compressed or package file.

In step 350, the license verification apparatus 90 determines whether the verification target corresponds to a kernel module.

If the verification target corresponds to a kernel module, the license verification apparatus 90 acquires the kernel module in step 360.

The license verification apparatus 90 discriminates the kernel module from the binary file, acquires the kernel modules, and displays a list of the acquired kernel modules on the user interface screen.

As described above, a license verification method and apparatus in accordance with an embodiment of the present invention is capable of extending a range of an open source license verification. That is, the above-described license verification methods and apparatuses are capable of verifying a license of binary files included in a product in order to verify outsourced binary files.

Further, the above-described license verification methods and apparatuses of the present invention are capable of improving license verification accuracy and efficiency by performing license verification directly on a binary file, as compared to a source code-based verification method.

Additionally, the above-described license verification methods and apparatuses of the present invention are capable of saving resources and times for verifying a source code, and reducing an initial investment cost and maintenance cost by introducing a commercialized source code verification tool.

Although license verification methods have been described above in a series of steps, those skilled in the art will appreciate that the present invention may be practiced with or without certain step(s) without departing from the scope of the present invention.

Additionally, the above-described methods of the present invention can be implemented in a form of computer-executable program commands and stored in a computer-readable storage medium. The computer programs may be recorded on computer-readable media and read and executed by computers. Such computer-readable media include all kinds of storage devices, such as ROM, RAM, Compact Disc (CD)-ROM, magnetic tape, floppy discs, optical data storage devices, etc. The computer readable media also include everything that is realized in the form of carrier waves, e.g., transmission over the Internet. The computer-readable media may be distributed to computer systems connected to a network, and codes on the distributed computer-readable media may be stored and executed in a decentralized fashion.

While the present invention has been particularly shown and described with reference to certain embodiments thereof, it will be understood by those of ordinary skill in the art that various changes in form and details may be made therein without departing from the spirit and scope of the present invention as defined by the following claims and their equivalents.

**Claims**

1.    A method of verifying a license by a license verification apparatus, the method comprising:

acquiring, by the license verification apparatus, a binary file;
extracting a symbol and a command sequence from the binary file; and
verifying the symbol and the command sequence using a database including licenses to be verified.

2. The method of claim 1, wherein acquiring the binary file comprises:

analyzing a type of a verification target;
performing one of decompressing, unpacking, and decompiling the verification target, when the verification target is one of a compressed file and a package file; and
acquiring the binary file, based on a result of one of the one of the decompressing, the unpacking, and the decompiling.

3. The method of claim 1, wherein the symbol includes at least one of a function name included in the binary file, a type of a function, and a length of the function name.

4. The method of claim 1, wherein extracting the symbol and the command sequence from the binary file comprises:

extracting machine language of the binary file;
converting the machine language to an assembly language; and
normalizing the assembly language for each function.

5. The method of claim 1, wherein verifying the symbol comprises determining whether the symbol of the binary file is included in the database.

6. The method of claim 1, wherein verifying the command sequence comprises determining whether the command sequence of the binary file is included in the database.

7. The method of claim 1, further comprising determining whether the binary file corresponds to a license based on a verification result of verifying the symbol and the command sequence of the binary file.

8. A license verification apparatus comprising:

an input unit configured to receive an input for a license verification request; and
a control unit configured to acquire a binary file in response to the license verification request, extract a symbol and a command sequence of the binary file, and verify the symbol and command sequence in series using a database including licenses to be verified.

9. The apparatus of claim 8, wherein the control unit is configured to analyze a type of a verification target, perform one of decompressing, unpacking, and decompiling the verification target, when the verification target is one of a compressed file and a package file, and acquire the binary file, based on a result of the one of the decompressing, the unpacking, and the decompiling.

10. The apparatus of claim 8, wherein the symbol comprises at least one of:

a function name included in the binary file;
a type of a function; and
a length of the function name.

11. The apparatus of claim 8, further comprising a storage unit configured to store the database including a knowledge database and a hex knowledge database.

12. The apparatus of claim 8, wherein the knowledge database comprises a symbol record including at least one of a project name for a license, a license type, string literals, and a function name.

13. The apparatus of claim 8, wherein the control unit is configured to determine whether the symbol of the binary file is included in the knowledge database.

14. The apparatus of claim 8, wherein the hex knowledge database comprises a command sequence record for use in license verification.

15. The apparatus of claim 8, wherein the control unit is configured to determine whether the command sequence of the binary file is included in the hex knowledge database.

# FIG. 1

LICENSE VERIFICATION APPARATUS                                    90

CONTROL UNIT                                                      20

32 — INPUT UNIT        KDB GENERATOR                              22

34 — STORAGE UNIT      HEX-KDB GENERATOR                          24

                       FILE ACQUIRER                             26

36 — DISPLAY UNIT      VERIFICATION TARGET EXTRACTOR             27

                       VERIFICATION ENGINE                       28

FIG. 2

# FIG. 3

EP 2 722 783 A2

**Web**

SourceForge
GitHub
GNU
FSF

Source code
auto crawling

**① Server1** 40

Source
Crawling
Repository

DISK SHARE →

← DISK SHARE

**② Server2** 50

KDB
Generation
(extractiong)

BSI
KDB

FIG. 4

# FIG. 5

| 70 | 72 | 74 | 76 |
|---|---|---|---|
| 1. COMPILE PKG | 2. EXTRACT ASSEMBLY LANGUAGE PER FUNCTION | 3. NORMALIZE ASSEMBLY LANGUAGE | 4. BUILD HEX-KDB |

- EXTRACT MACHINE LANGUAGE
- DUMP MACHINE LANGUAGE FILE
- ASSEMBLE

- ASSEMBLY LANGUAGE-BASED NORMALIZATION

- BUILD DB OF PER-PKG FUNCTION COMMAND/SEQUENCE

FIG. 6

DB Table

| PKG NAME | function | ASSEMBLY LANGUAGE COMMAND SEQUENCE |
|---|---|---|
| busybox | sane0 | ADD \| MOV \| BN ... |
| busybox | add_to_global0 | LDR \| STR \| PUSH ... |
| busybox | fine_execable0 | CMP \| MOV \| MOV ... |
| busybox | showmode0 | CMP \| MOV \| BNE ... |
| iptables | sigprocmask0 | . . . |
| . . . | . . . | . . . |

## FIG. 7

**Setting Help**

VERIFICATION TARGET: D:\2012\2012_BSI_WIRELESSSESUPPORT\I9250UGLA2\iwgetid ▼   SELECT   VERIFY

Console | Report

**License Inspection Field**
　Main Page
➤ Binary( 1 )
　　Binary( 1 )
➤ Library( 0 )
➤ Kernel Module( 0 )
➤ Class( 0 )
➤ Unknown( 0 )
➤ Appendix

Main Page | Binary Report | Library Report | KO file Report | Class and APK file Report

Unknown Report

### Non-Source Code License Check Report

**Binary Information**
back to summary

| file name | license string match | scanning GPL function | |
|---|---|---|---|
| D:\2012\2012_BSI_WIRELESSSE SUPPORT\I9250UGLA2\iwgetid | | matched [GPL pkg ]1 collapse<br>• [wireless-tools-30~pre9]<br>　7 collapse<br>　　○ iw_freq_to_channel<br>　　○ iw_sockets_open<br>　　○ iw_print_freq<br>　　○ iw_get_range_info<br>　　○ iw_freq2float<br>　　○ iw_essid_escape<br>　　○ iw_ether_ntop | 14KB |

# FIG. 8

START

ACQUIRE VERIFICATION TARGET BINARY FILE ～400

EXTRACT SYMBOL AND COMMAND SEQUENCE ～410

420
KDB-BASED SYMBOL MATCH? — NO

YES

VERIFY SYMBOL ～430

440
HEX-KDB-BASED COMMAND SEQUENCE MATCH? — NO

YES

VERIFY COMMAND SEQUENCE ～450

VERIFY LICENSE OF BINARY FILE ～460

DISPLAY VERIFICATION RESULT ～470

END

# FIG. 9

**Setting Help**

VERIFICATION TARGET: D:\2012\2012_BSI_WIRELESSSESUPPORT\I9250UGLA2\iwgetid ▼  | SELECT | VERIFY |

**Console** / **Report**

**License Inspection Field**
- Main Page
- ➤ Binary( 0 )
- ➤ Library( 0 )
- ➤ Kernel Module( 1 )
    - Kernel Module( 1 )
- ➤ Class( 0 )
- ➤ Unknown( 0 )
- ➤ Appendix

Main Page   Binary Report   Library Report   **KO file Report**   Class and APK file Report

## Non-Source Code License Check Report
Linux Kernel Module -OSS License Information

Linux Kernel Module license Status

GPL

| file name | license | matching Kernel GPL ONLY API | file size | system inform |
|-----------|---------|------------------------------|-----------|---------------|
|           |         |                              |           |               |

5

# FIG. 10

```
                    ┌─────────────┐
                    │    START    │
                    └──────┬──────┘
                           │
                           ▼
        ┌──────────────────────────────────────┐
        │   ANALYZE VERIFICATION TARGET TYPE    │───300
        └──────────────────┬───────────────────┘
                           │
                           ▼                        310
                  ◇─────────────────◇
                 ╱                   ╲        NO
         ◇ COMPRESSED OR PACKAGE FILE? ◇──────────┐
                 ╲                   ╱            │
                  ◇─────────────────◇             │
                           │ YES                   │
                           ▼                        │
        ┌──────────────────────────────────────┐   │
        │        DECOMPRESS OR DECOMPILE        │───320
        └──────────────────┬───────────────────┘   │
                           │◄──────────────────────┘
                           ▼                        330
                  ◇─────────────────◇
                 ╱                   ╲        NO
         ◇      BINARY FILE?         ◇──────────┐
                 ╲                   ╱            │
                  ◇─────────────────◇             │
                           │ YES                   │
                           ▼                        │
        ┌──────────────────────────────────────┐   │
        │          ACQUIRE BINARY FILE          │───340
        └──────────────────┬───────────────────┘   │
                           │◄──────────────────────┘
                           ▼                        350
                  ◇─────────────────◇
                 ╱                   ╲        NO
         ◇  CORRESPOND TO KERNEL MODULE? ◇──────┐
                 ╲                   ╱            │
                  ◇─────────────────◇             │
                           │ YES                   │
                           ▼                        │
        ┌──────────────────────────────────────┐   │
        │         ACQUIRE KERNEL MODULE         │───360
        └──────────────────┬───────────────────┘   │
                           │◄──────────────────────┘
                           ▼
                    ┌─────────────┐
                    │     END     │
                    └─────────────┘
```

FIG. 11

```
                    ┌─────────────┐
                    │    START    │
                    └──────┬──────┘
                           │
           ┌───────────────▼───────────────┐
           │  EXTRACT SYMBOL OF OPEN SOURCE │────100
           └───────────────┬───────────────┘
                           │
           ┌───────────────▼───────────────┐
           │ CALCULATE UNIQUE DEGREE OF SYMBOL │────110
           └───────────────┬───────────────┘
                           │                  120
                     ◇─────▼─────◇                      NO
                    ╱             ╲  ───────────────────────────┐
                   ◇ UNIQUE DEGREE ≥ THRESHOLD? ◇               │         135
                    ╲             ╱                             ▼
                     ◇─────┬─────◇                    ┌──────────────────┐
                           │ YES                      │  EXCLUDE SYMBOL  │
           ┌───────────────▼───────────────┐          └──────────────────┘
           │  SELECT LICENSE REFERENCE SYMBOL │────130
           └───────────────┬───────────────┘
                           │
           ┌───────────────▼───────────────┐
           │ GENERATE KNOWLEDGE DATABASE (KDB) │────140
           └───────────────┬───────────────┘
                           │
                    ┌──────▼──────┐
                    │     END     │
                    └─────────────┘
```